# EUROPEAN PATENT SPECIFICATION

(11) **EP 3 960 421 B1**
(45) Date of publication and mention of the grant of the patent: **01.05.2024**
(21) Application number: 20891019.0
(22) Date of filing: 26.03.2020
(51) Int. Cl.: B29C 48/00, B29C 48/08, B29C 55/14, B29C 55/16, B29D 7/01, B29L 31/00, H01M 50/403, H01M 50/417

(54) **DEVICE AND METHOD FOR PREPARING HIGH-STRENGTH HIGH-MODULUS POLYOLEFIN THIN FILM, AND HIGH-STRENGTH HIGH-MODULUS POLYOLEFIN THIN FILM**
VORRICHTUNG UND VERFAHREN ZUR HERSTELLUNG EINER HOCHFESTEN POLYOLEFINDÜNNSCHICHT MIT HOHEM MODUL UND HOCHFESTE POLYOLEFINDÜNNSCHICHT MIT HOHEM MODUL
DISPOSITIF ET PROCÉDÉ DE PRÉPARATION DE FILM MINCE DE POLYOLÉFINE À HAUT MODULE D'ÉLASTICITÉ ET À HAUTE RÉSISTANCE, ET FILM MINCE DE POLYOLÉFINE À HAUT MODULE D'ÉLASTICITÉ ET À HAUTE RÉSISTANCE

(30) Priority: 19.11.2019 CN 201911132107
(43) Date of publication of application: 02.03.2022
(73) Proprietor: Qingdao Lanketu Membrane Materials Co., Ltd., Qingdao, Shandong 266510 (CN)
(72) Inventor: ZHI, Lipeng, Qingdao, Shandong 266510 (CN); LIU, Peng, Qingdao, Shandong 266510 (CN); LV, Zhanfei, Qingdao, Shandong 266510 (CN); SUN, Changfeng, Qingdao, Shandong 266510 (CN); XU, Yang, Qingdao, Shandong 266510 (CN); YANG, Bo, Qingdao, Shandong 266510 (CN)
(74) Representative: Chung, Hoi Kan
(86) International application number: PCT/CN2020/081303
(87) International publication number: WO 2021/098110

(56) References cited:
- CN-A- 1 201 418
- CN-A- 106 978 637
- CN-A- 106 978 637
- CN-A- 110 165 123
- CN-A- 110 165 123
- CN-A- 110 815 763
- JP-A- H08 134 253
- JP-A- 2016 085 980
- JP-A- 2016 085 980
- TW-A- 201 137 000

## Description

### TECHNICAL FIELD

The present invention relates to the field of polyolefin thin films, in particular to a device and method for preparing a high-strength and high-modulus polyolefin thin film, and a high-strength and high-modulus polyolefin thin film.

### BACKGROUND

A wet-process lithium-ion battery thin film is one of the important component materials that must be used in current liquid lithium-ion batteries, especially power batteries and high-end 3C digital batteries. Polyolefin thin films have more cost-effective advantages than traditional materials due to its low cost and high strength.

Conventional methods for wet-process polyolefin thin film preparation are to use plasticized extrusion casting, single asynchronous or synchronous stretching, extraction drying, secondary horizontal stretching and shaping, and winding. In order to ensure the effect of extraction and cooling after plasticization and extrusion, the cast sheet has a general thickness of not more than 2 mm; and the bidirectional (MD/TD) ratio of a single asynchronous stretching or synchronous stretching and bidirectional stretching does not exceed 10/10 ratios.

In the prior art, during the stretching process, excessive transverse stretching ratios will result in obvious sagging in the middle portion of the thin film due to gravity, and tend to cause serious problems such as a device being scratching by the thin film and an uneven transverse force; for a single synchronous stretching, there are similar previous problems in the transverse direction to that in a single asynchronous stretching. In addition, for the longitudinal stretching in a bidirectional synchronous stretching device, the longitudinal ratio is achieved by changing the spacing of the chain clips; calculated with the initial clip spacing of 0.05 m, the longitudinal ratio needs to reach 100 ratios, and the maximum spacing between two chain clips needs to reach 5 m; if the spacing is too large, the thin film will drop down in the middle portion, being not conducive to being heated, bringing about great margin effects, and failing to produce a qualified thin film. Therefore, the current mainstream process of single asynchronous or synchronous stretching device cannot achieve the ultra-high regional stretching ratio of the thin film, which generally stays below 100 ratios; and the obtained thin film with a low stretching ratio has the problems of insufficient strength and small modulus.

Prior art (TW201137000 A) discloses at least a selected microporous membrane is made by a dry-stretch process and has substantially round shaped pores and a ratio of machine direction tensile strength to transverse direction tensile strength in the range of 0.5 to 6.0. The method of making the foregoing microporous membrane may include the steps of: extruding a polymer into a nonporous precursor, and biaxially stretching the nonporous precursor, the biaxial stretching including a machine direction stretching and a transverse direction stretching, the transverse direction including a simultaneous controlled machine direction relax. At least selected embodiments of the invention may be directed to biaxially oriented porous membranes, composites including biaxially oriented porous membranes, biaxially oriented microporous membranes, biaxially oriented macroporous membranes, battery separators, filtration media, humidity control media, flat sheet membranes, liquid retention media, and the like, related methods, methods of manufacture, methods of use, and the like.

Prior art (JPH08134253A) discloses a method for producing a microporous biaxially oriented film composed of high molecular weight polyethylene or ethylene/α-olefin copolymer (hereinafter simply referred to as high molecular weight polyethylene). More specifically, high molecular weight polyethylene (A) having a limiting viscosity [η] of 3.5 dl/g or more and paraffin wax (B) are melt-kneaded at a specific ratio and under conditions to form a sheet. Then, the film is biaxially stretched in the presence of at least a part of the paraffin wax (B) at a temperature higher than the melting point of the paraffin wax (B) and lower than the melting point of the high molecular weight polyethylene (A), and heat-treated in a fixed state in at least one direction, and then substantially all of the paraffin wax (B) is removed with an alcoholic solvent (C) to produce a microporous high-molecular-weight polyethylene film with excellent air permeability. The film obtained by the present invention is suitable for use mainly as a separator for non-aqueous electrolyte secondary batteries, particularly as a separator for lithium ion batteries.

Prior art (CN110165123 A) discloses a polyethylene resin is melt and blended with diluent; the melt blended treated product is subjected to molding and cooling treatment to obtain a sheet having a predetermined-shape cross section; the sheet is subjected to longitudinal stretching treatment and transverse stretching treatment to obtain a base film; the base film is post-treated to obtain a polyethylene microporous film, and longitudinal stretching treatment is performed by means of a gradient increasing speed, roller speed ratios of adjacent two stretching rolls are equal and are in a range of 1.1-1.2, transverse stretching treatment is performed at the temperature of 120-130 DEG C, and a ratio of the thickness difference to the width of the sheet is (100~300 mum)/500 mum. The preparation method is advantaged in that the prepared polyethylene microporous film has gaspermeability difference of 30 s/100 cc in the transverse width (3 to 5 m) direction, and the qualification rate is high.

In view of this, the present application is hereby provided.

### SUMMARY

An object of the present invention is to provide a device in accordance with claim 1 and method in accordance with claim 5 for preparing a high-strength and high-modulus polyolefin thin film, and a high-strength and high-modulus polyolefin thin film, so as to solve the described problems.

In order to achieve the described object, the present invention adopts the following technical solutions: a device for preparing a high-strength and high-modulus polyolefin thin film, wherein the device comprises a melt extruder, a cooling system, a stretching system and an extraction system, and the melt extruder, the cooling system, the stretching system and the extraction system are configured in a sequence; the stretching system comprises a plurality among a transverse stretching machine for stretching an object to be stretched in a transverse direction, a longitudinal stretching machine for stretching an object to be stretched in a longitudinal direction, a slitting machine for slitting an object to be stretched, and a bidirectional synchronous stretching machine for stretching an object to be stretched in a bidirectional direction.

By using multi-stage stretching and slitting, the problems caused by sagging of a thin film due to gravity during the stretching process, and the problems caused by limited stretching ratios of a single set of synchronous bidirectional stretching or a single set of asynchronous stretching device are solved, achieving a maximum regional stretching ratio of at most 100*100 ratios, and obtaining a high-strength and high-modulus thin film.

Preferably, the device for preparing a high-strength and high-modulus polyolefin thin film further comprises a secondary transverse stretching system for hole expanding and retraction, and a heat shaping system.

Preferably, the cooling system comprises a flattening roller, a shaping roller, a cooling roller and a cooling tank; and the shaping roller is provided between the flattening roller and the cooling roller, the flattening roller is used for attaching a melt from a die of the melting extruder to a surface of the shaping roller, a lower portion of the shaping roller is provided within the cooling tank, and the cooling roller is used for cooling a cast sheet processed by the shaping roller.

The cooling system for a cast sheet has a poor cooling effect for a cast sheet having a large thickness, which results in a large difference in thermal history between front and back surfaces of a thin film, thereby resulting in a large difference in performance; and the heat transfer coefficient of the cast sheet is relatively low, when the cast sheet is thick, if no forced cooling measure is taken on the back surface, the cooling speed on the back surface will be too slow to form a large flake crystal or even a sphaerocrystal, and when the film is formed by stretching in the next step, the performance difference of the thin film is amplified. The cooling system provided in the present application can effectively solve the problem that a conventional quenching roller system is not suitable for cooling a cast sheet having a large thickness (the conventional quenching roller system can ensure the cooling effect when processing a cast sheet having a small thickness).

Preferably, the stretching system comprises the longitudinal stretching machine, the transverse stretching machine, the slitting machine and the bidirectional synchronous stretching machine, and the longitudinal stretching machine, the transverse stretching machine, the slitting machine and the bidirectional synchronous stretching machine are provided in the sequence; and the slitting machine is used for slitting a thin film stretched by the transverse stretching machine.

After the primary stretching, the width of the film is relatively large, and when the secondary stretching is performed, the film is slit to reduce the width of the film, so as to match the narrow inlet of the subsequent stretching equipment and achieve a large transverse stretching ratio.

Preferably, the device further comprises a steering device, wherein the steering device is provided behind the slitting machine; preferably, a plurality of the bidirectional synchronous stretching machines are provided; preferably, three bidirectional synchronous stretching machines are stacked in a height direction; preferably, each bidirectional synchronous stretching machine is provided with a heating oven and a cooling oven, the heating oven has a temperature accuracy of ±0.5°C and a wind speed uniformity of ±1 m/s. When performing secondary stretching after slitting, the thin film needs to enter along the center of the device. The conventional device processing technology cannot achieve that the thin film enters a plurality of side-by-side secondary stretching machines. In the present application, a steering device is provided to steer the slit film multiple ratios, so that the thin film successfully enters the secondary stretching machine. In order to reduce the footprint, the bidirectional synchronous stretching machine can also be designed into a multi-layer layout structure. The temperature accuracy and the uniformity wind speed of the heating oven are controlled, so that the uniformity of the thin film during the stretching process can be ensured.

Optionally, the extraction system comprises one or more groups of extraction grooves, and each group of the extraction tanks is provided with multiple groups of drafting rollers and ultrasonic generation devices.

Multiple groups of drafting rollers are provided so that multiple layers of thin films can be simultaneously introduced into a single extraction tank, thereby avoiding the simultaneous configuration of multiple extraction tanks, and reducing device investment and plant investment.

A method for preparing a high-strength and high-modulus polyolefin thin film with the device, comprising:

melting and plastifying polyolefin resin and a solvent in the melting extruder; after extrusion by using a die, implementing thermal-induced phase separation at a shaping roller and a cooling tank, so as to obtain a cast sheet; and performing stretching by using a multi-stage combined stretching system, performing extraction by using an extraction system, and performing a post-treatment, so as to obtain the high-strength and high-modulus polyolefin thin film. Preferably, a melt extruded from the die has a thickness of 2 to 10 mm.

A cast sheet has a large thickness can be obtained from a melt having a large thickness, thereby ensuring that the thin film can be subjected to large ratio stretching so as to obtain excellent properties such as high strength and high modulus.

Preferably, the stretching system comprises the stretching mode of:
performing 1 to 10 ratios of longitudinal stretching, 1 to 10 ratios of transverse stretching and (1 to 10)*(1 to 10) ratios of bidirectional synchronous stretching in the sequence; or,
performing 1 to 10 ratios of the longitudinal stretching and 1 to 10 ratios of the transverse stretching in the sequence, and performing 1 to 10 ratios of the longitudinal stretching and 1 to 10 ratios of the transverse stretching repeatedly once; or,
performing (1 to 10)*(1 to 10) ratios of an independent bidirectional synchronous stretching continuously twice; or, performing (1 to 10)*(1 to 10) ratios of the bidirectional synchronous stretching, 1 to 10 ratios of the longitudinal stretching, and 1 to 10 ratios of the transverse stretching in the sequence.

The formed cast sheet needs to achieve ultra-high ratio stretching in a product relationship of longitudinal and transverse directions by using different combination methods for the longitudinal stretching, the transverse stretching and the longitudinal and a transverse synchronous stretching. The (1 to 10)*(1 to 10) ratios of the bidirectional synchronous stretching refers to 1 to 10 ratios of the transverse direction and 1 to 10 ratios of the longitudinal direction.

Optionally, performing the post-treatment comprises drying, transverse hole expansion and stretching, transverse and longitudinal retraction treatment and heat shaping in the sequence.

Preferably, when the extraction is performed, a stretched scrap material is not cut in an advance. The transverse hole expansion and stretching can ensure that the thin film has an appropriate porosity; the transverse and longitudinal retraction treatment and heat shaping abandon the conventional transverse unidirectional retraction treatment method, and allow the film material to be simultaneously subjected to retraction treatment in the longitudinal and transverse directions, thereby improving bidirectional heat contraction stability; when the extraction and drying are performed, the stretched scrap material is not cut in the advance. The greater tension of the thick scrap material can suppress the lateral contraction of the thin film during the extraction process. The extraction contraction will cause problems such as an increase in transverse range and poor uniformity of the thin film, thereby seriously affecting the consistency, safety and reliability of lithium-ion batteries.

A high-strength and high-modulus polyolefin thin film prepared by using the method for preparing a high-strength and high-modulus polyolefin thin film;
preferably, the high-strength and high-modulus polyolefin thin film has a thickness of 2 to 100 µm, an air permeability of 0.005 to 1.6 cm³s⁻¹cm⁻² (10 to 300 s/in2*100 cc), a tensile strength of 300 to 2000 MPa, a specific puncture strength of 490332.5 to 2941995 N/m (50 to 300 gf/µm), a porosity of 25 to 75%, and a modulus of 2 to 30 GPa.

Compared with the prior art, the present invention has the following beneficial effects:
a cooling system and a multi-stage stretching machine are provided, achieving high ratio stretching; and according to the method provided in the present application, the regional stretching ratio can be significantly increased up to the order of magnitude of 10000 ratios, greatly improving the orientation, crystallization, fine denier of microscopic fibers and specific strength of the thin film material, reducing the elongation at break of the film material, and forming an ultra-high strength and ultra-high modulus polyolefin thin film material.

### BRIEF DESCRIPTION OF DRAWINGS

In order to describe the technical solutions in the embodiments of the present invention more clearly, the following will briefly introduce the drawings that need to be used in the embodiments. It should be understood that the accompanying drawings illustrate only some embodiments of the present utility model, and therefore should not be considered as limiting the scope. A person of ordinary skill in the art can obtain other relevant drawings according to these accompanying drawings without creative efforts.
FIG. 1 shows a schematic diagram of a cooling system provided in an embodiment;
FIG. 2 shows a schematic view of a longitudinal stretching machine provided in an embodiment;
FIG. 3 shows a schematic view of a transverse stretching machine provided in an embodiment;
FIG. 4 shows a schematic diagram of a slitting machine and a steering device provided in an embodiment;
FIG. 5 shows a schematic diagram of a bidirectional synchronous stretching machine provided in an embodiment;
FIG. 6 shows a schematic view of an extraction tank provided in an embodiment;
FIG. 7 shows a scanning electron microscope image of a side section of the cast sheet on the flattening roller provided in Comparative Embodiment 2;
FIG. 8 shows a scanning electron microscope image of a cross section of the thin film provided by Comparative Embodiment 2;
FIG. 9 shows a scanning electron microscope image of a side section of the cast sheet on the flattening roller provided in Comparative Embodiment 3; and
FIG. 10 shows a scanning electron microscope image of a cross section of the thin film provided in Comparative Embodiment 3.

### DETAILED DESCRIPTION OF THE EMBODIMENTS

Reference will be made in detail to embodiments of the present invention, embodiments of which are illustrated in the drawings, in which same or similar reference numerals are used to indicate same or similar members or members having same or similar functions. The embodiments described below with reference to drawings are exemplary, and are only used to understand the present invention, but should not be constructed as limitations to the present invention.

In the description of the present invention, it should be understood that, orientation or position relationships indicated by terms such as "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" are orientation or position relationships on the basis of those illustrated in the drawings, which are only used to facilitate description of the present invention and simplify the description, and do not indicate or imply that the device or element referred to must have a specific orientation, or be constructed or operated in a specific orientation, and therefore cannot be construed as limitations to the present invention.

In addition, terms such as "first" and "second" are used herein for purposes of description and are not intended to indicate or imply relative importance or to imply the number of indicated technical features. Thus, the features defined by "first" and "second" may explicitly or implicitly include one or more of the features. In the description of the present invention, the term "a plurality of" means two or more than two, unless specified otherwise.

In the present invention, unless specified or limited otherwise, the terms "mounted", "interconnected", "connected", "fixed" and the like are used broadly, and may be, for example, fixed connections, detachable connections, or integral connections; may also be mechanical or electrical connections; may also be direct connections or indirect connections by using intervening structures; and may also be inner communications or interaction relationships of two elements. The specific meanings of the described terms in the present invention can be understood by those skilled in the art according to specific situations.

In the present invention, unless specified or limited otherwise, a structure in which a first feature is "on" or "under" a second feature may be that the first feature is in direct contact with the second feature, and the first feature and the second feature are in indirect contact by using an intermediary. Furthermore, a first feature "on", "above", or "on top of" a second feature may be that the first feature is right or obliquely "on", "above", or "on top of" the second feature, or just means that the first feature is at a height higher than that of the second feature. The first feature "below", "under", or "on bottom of" the second feature may be that the first feature is right or obliquely "below", "under", or "on bottom of" the second feature, or just means that the first feature is at a height lower than that of the second feature.

The term "prepared from..." as used herein is synonymous with "comprising". As used herein, the term "comprising", "including", "having", "containing" or any other variation thereof, is intended to cover a non-exclusive inclusion. For example, a composition, step, method, article, or apparatus that comprises a list of elements is not necessarily limited to only those elements but may include other elements not expressly listed or inherent to such composition, step, method, article, or apparatus.

The conjunction "consisting of" excludes any element, step, or component not specified. If used in a claim, this phrase would render the claim closed, such that it does not contain materials other than those described, except for conventional impurities associated therewith. When the phrase "consisting of" appears in the clause of the subject of the claim rather than immediately after the subject matter, it is limited to the elements described in that clause; and other elements are not excluded from the claims as a whole.

When an equivalent, concentration, or other value or parameter is expressed as either a range, preferred range, or a range defined by a list of upper preferred values and lower preferred values, it is to be constructed as specifically disclosing all ranges formed from any pair of any upper range limit or preferred value with any lower range limit or preferred value, regardless of whether ranges are separately disclosed. For example, when a range of "1 to 5" is disclosed, the described range should be interpreted to include the ranges "1 to 4", "1 to 3", "1 to 2", "1 to 2 and 4 to 5", "1 to 3 and 5", etc. When a range of numerical values is described herein, the range is intended to include the end values thereof and all integers and fractions within the range, unless otherwise specified.

In these embodiments, parts and percentages are by mass unless otherwise indicated.

"Parts by mass" refers to the basic units of measure which express the relationship of the proportions by mass of the components, and 1 part can express any unit mass, for example, 1 g, 2.689 g, and the like. If it is said that the parts by mass of the A component are a parts and the parts by mass of the B component are b parts, it represents the ratio of the mass of the A component to the mass of the B component is a:b. Alternatively, the mass of the A component is aK and the mass of the B component is bK (K is an arbitrary number and represents a multiple factor). It cannot be misunderstood that, different from the parts by mass, the sum of parts by mass of all the components is not limited to 100 parts by mass.

"And/or" is used to mean that one or both of the illustrated cases may occur, e. g., A and/or B includes (A and B) and (A or B).

### Embodiment 1

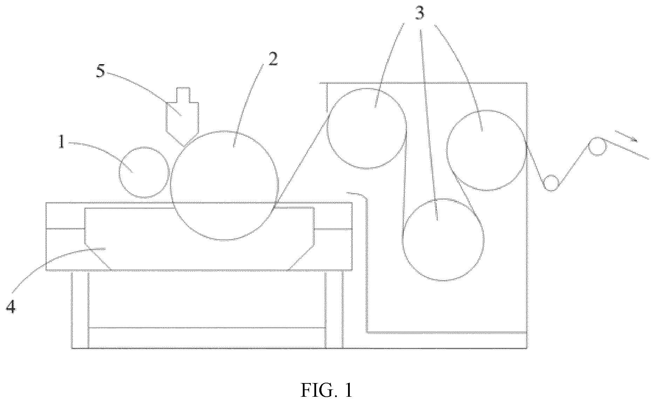

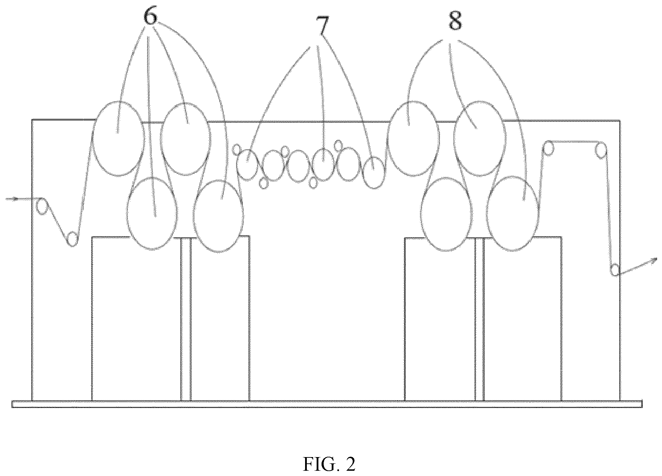

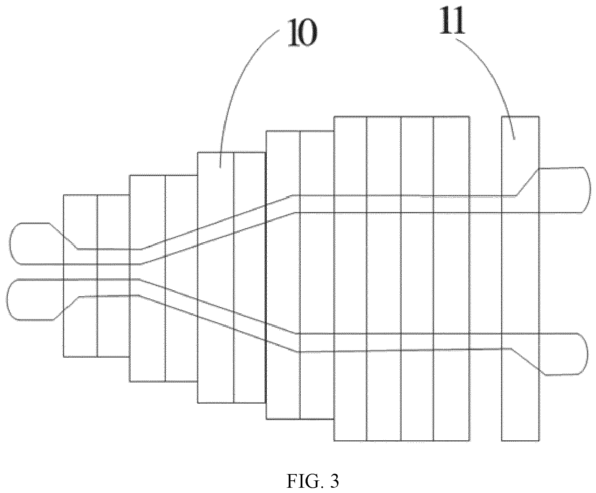

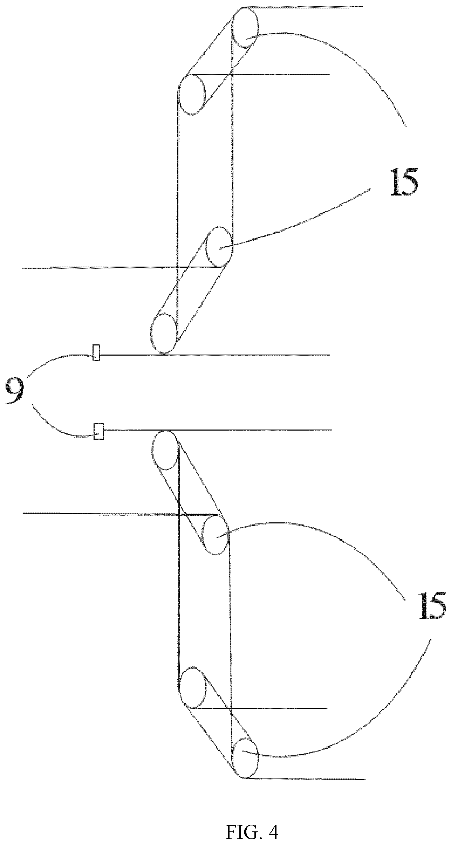

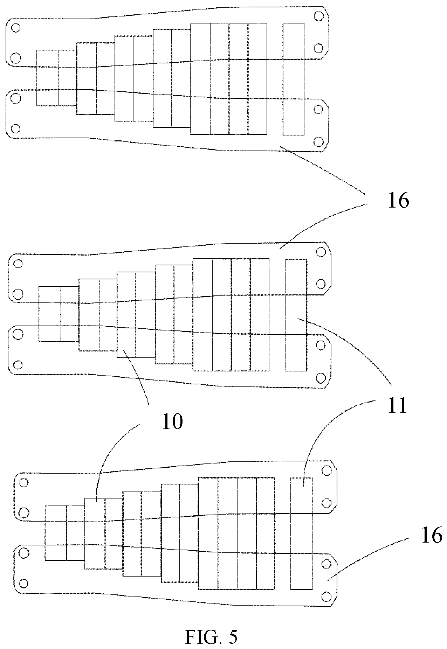

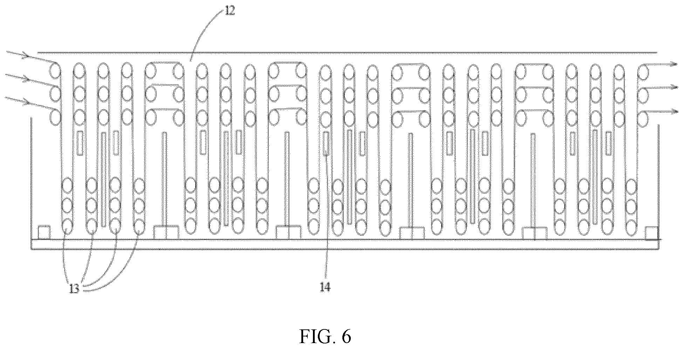

Please refer to FIG. 1 to FIG. 6, a device for preparing a high-strength and high-modulus polyolefin thin film comprises a twin-screw extruder, a cooling system, a stretching system and an extraction system, and the melt extruder, the cooling system, the stretching system and the extraction system are configured in a sequence; the cooling system comprises a flattening roller 1, a shaping roller 2, a cooling roller 3 and a cooling tank 4; and the shaping roller 2 is provided between the flattening roller 1 and the cooling roller 3, the melt from the die 5 of the twin-screw extruder is attached to the surface of the shaping roller 2 under the action of the abutting roller 1 and moves along with the rotation of the shaping roller 2, and the lower portion of the shaping roller 2 is provided in the cooling tank 4 so that the melt can be impregnated in the cooling medium of the cooling tank 4. The cast sheet attached to the surface of the shaping roller 2 is drafted to the cooling roller 3, and the cast sheet is further cooled by winding a plurality of the cooling rollers 3. The stretching system comprises a longitudinal stretching machine (comprising a preheating roller 6, a stretching roller 7 and a longitudinal stretching machine shaping roller 8), a transverse stretching machine and a slitting machine 9 for slicing a thin film stretched by the transverse stretching machine, in which the transverse stretching machine is provided with a heating oven 10 and a cooling oven 11. The heating oven 10 has a temperature accuracy of ±0.5°C and a wind speed uniformity of ±1 m/s. The extraction system comprises five groups of extraction tanks 12, and each group of the extraction tanks 12 is provided with three groups of drafting rollers 13 and two ultrasonic generation devices 14.

First, polyethylene and white oil are added into a twin-screw extruder in the mass ratio of 1:3 by using a powder balance and a plunger pump, and are molten and plasticized at 190°C. The melt is extruded from the die 5 to form a sheet, and the gel-shaped sheet is immediately passed through a pre-set gap between a shaping roller 2 and a flattening roller 1 of a casting machine (the surface temperature of the shaping roller and the flattening roller is set to be 16°C), and a cooling tank 4 (a cooling medium is water) is added to force-cool the reverse side of the melt, the temperature of the cooling tank 4 is 20°C, and a cast sheet having a thickness of 3.9 mm is formed. The cast sheet is subjected to 6 ratios of stretching in a mechanical direction (MD) at 100°C by using a longitudinal stretching machine, and then is subjected to 6 ratios of stretching in a transverse direction (TD) at 120°C by using a transverse stretching machine. Then, the stretched oil film after cutting a scrap material is cut into three sections with a slitting machine, in which each section has a width of 800 mm; the oil film at the two sides is fed into a second longitudinal stretching machine (the two longitudinal stretching machines before and after being configured) by using a steering device 15 to be subj ected to 1.4 ratios of stretching in a mechanical direction (MD) at 100°C, and then is fed into the second transverse stretching machine (the two transverse stretching machines before and after being configured) to be subjected to 6 ratios of stretching in a transverse direction (TD) at 120°C; and the oil film at the middle section is directly fed into the second longitudinal stretching machine to be subjected to 1.4 ratios of stretching in the mechanical direction (MD) at 100°C, and is fed into the second transverse stretching machine to be subjected to 6 ratios of stretching in the transverse direction (TD) at 120°C. The second bidirectional stretched oil film is then passed through an extraction tank 12 containing dichloromethane to extract white oil from the oil film, and the extracted film is dried. The resulting dried microporous film is fed into a third transverse stretching machine to subjected to 1.3 ratios of stretching in the TD direction at 130°C, to be subjected to 1.1 ratios of retracting 1.1 ratios in the TD direction and to be subjected to heat shaping at 133°C. Next, the thin film is wound up by a take-up roller so as to obtain a polyethylene microporous film having a thickness of 7.4 µm.

The thickness, tensile strength, puncture strength, porosity, air permeability and thermal contraction of the prepared polyethylene microporous membrane are measured respectively, and the measurement results of the characteristics of the obtained polyolefin microporous membrane are shown in table 1.

### Embodiment 2

Please refer to FIG. 1 to FIG. 6, a device for preparing a high-strength and high-modulus polyolefin thin film comprises a twin-screw extruder, a cooling system, a stretching system and an extraction system, and the melt extruder, the cooling system, the stretching system and the extraction system are configured in the sequence; the cooling system comprises a flattening roller 1, a shaping roller 2, a cooling roller 3 and a cooling tank 4; and the shaping roller 2 is provided between the flattening roller 1 and the cooling roller 3, the melt from the die 5 of the twin-screw extruder is attached to the surface of the shaping roller 2 under the action of the abutting roller 1 and moves along with the rotation of the shaping roller 2, and the lower portion of the shaping roller 2 is provided in the cooling tank 4 so that the melt can be impregnated in the cooling medium of the cooling tank 4. The cast sheet attached to the surface of the shaping roller 2 is drafted to the cooling roller 3, and achieving further cooling of the cast sheet by winding a plurality of cooling rollers 3. The stretching system comprises a longitudinal stretching machine (comprising a preheating roller 6, a stretching roller 7 and a longitudinal stretching machine shaping roller 8), a transverse stretching machine and a slitting machine 9, wherein the transverse stretching machine is provided with a heating oven 10 and a cooling oven 11. The heating oven 10 has a temperature accuracy of ±0.5°C and a wind speed uniformity of ±1 m/s. The extraction system comprises five groups of extraction tanks 12, and each group of the extraction tanks 12 is provided with three groups of drafting rollers 13 and two ultrasonic generation devices 14.

First, polyethylene and white oil are added into a twin-screw extruder in the mass ratio of 1:3 by using a powder balance and a plunger pump and are molten and plasticized at 190°C. The melt is extruded from the die 5 to form a sheet, and the gel-shaped sheet is immediately passed through a pre-set gap between a shaping roller 2 and a flattening roller 1 of a casting machine (the surface temperature of the shaping roller and the flattening roller is set to be 16°C), and a cooling tank 4 (a cooling medium is water) is added to force-cool the reverse side of the melt, the temperature of the cooling tank 4 is 20°C, and a cast sheet having a thickness of 4.4 mm is formed. The cast sheet is subjected to 6 ratios of stretching in a mechanical direction (MD) at 100°C by using a longitudinal stretching machine, and then is subjected to 6 ratios of stretching in a transverse direction (TD) at 120°C by using a transverse stretching machine. The stretched oil film after cutting a scrap material is then cut into three sections, in which each section has a width of 800 mm; the oil film at the two sides is fed into a transverse stretching machine (the two transverse stretching machines before and after being configured) by using a steering device 15 to be subjected to 6 ratios of stretching at 120°C in a transverse direction (TD), and the oil film in the middle section is directly fed into a second transverse stretching machine to be subjected to 6 ratios of stretching at 120°C in a transverse direction (TD). The second bidirectional stretched oil film is then passed through an extraction tank 12 containing dichloromethane to extract white oil from the oil film, and the extracted film is dried. The resulting dried microporous film is fed into a transverse stretching machine to be subjected to 1.3 ratios of stretching in the TD direction at 130°C, then to be subjected to 1.1 ratios of retracting in the TD direction, and to be subjected to heat shaping at 133°C. Next, the thin film is wound up by a take-up roller so as to obtain a polyethylene microporous film having a thickness of 9 µm.

The thickness, tensile strength, puncture strength, porosity, air permeability and thermal contraction of the prepared polyethylene microporous membrane are measured respectively, and the measurement results of the characteristics of the obtained polyolefin microporous film are shown in table 1.

### Embodiment 3

Please refer to FIG. 1 to FIG. 6, a device for preparing a high-strength and high-modulus polyolefin thin film comprises a twin-screw extruder, a cooling system, a stretching system and an extraction system, and the melt extruder, the cooling system, the stretching system and the extraction system are configured in the sequence; the cooling system comprises a flattening roller 1, a shaping roller 2, a cooling roller 3 and a cooling tank 4; and the shaping roller 2 is provided between the flattening roller 1 and the cooling roller 3, the melt from the die 5 of the twin-screw extruder is attached to the surface of the shaping roller 2 under the action of the flattening roller 1 and moves along with the rotation of the shaping roller 2, and the lower portion of the shaping roller 2 is provided in the cooling tank 4 so that the melt can be impregnated in the cooling medium of the cooling tank 4. The cast sheet attached to the surface of the shaping roller 2 is drafted to the cooling roller 3, and achieving further cooling of the cast sheet by winding a plurality of cooling rollers 3. The stretching system comprises a longitudinal stretching machine (comprising a preheating roller 6, a stretching roller 7 and a longitudinal stretching machine shaping roller 8), a transverse stretching machine, a slitting machine 9 for slitting a thin film stretched by the transverse stretching machine, a steering device 15 and a bidirectional synchronous stretching machine 16, in which the transverse stretching machine and the bidirectional synchronous stretching machine 16 are provided with a heating oven 10 and a cooling oven 11; the steering device 15 is provided between the transverse stretching machine and the bidirectional synchronous stretching machine 16; three bidirectional synchronous stretching machines 16 are stacked in a height direction. The heating oven 10 has a temperature accuracy of ±0.5°C and a wind speed uniformity of ±1 m/s. The extraction system comprises five groups of extraction tanks 12, and each group of the extraction tanks 12 is provided with three groups of drafting rollers 13 and two ultrasonic generation devices 14.

First, polyethylene and white oil are added into a twin-screw extruder in the mass ratio of 1:3 by using a powder balance and a plunger pump, and are molten and plasticized at 190°C. The melt is extruded from the die 5 to form a sheet, and the gel-shaped sheet is immediately passed through a pre-set gap between a shaping roller 2 and a flattening roller 1 of a casting machine (the surface temperature of the shaping roller and the flattening roller is set to be 16°C), and a cooling tank 4 (a cooling medium is water) is added to force-cool the reverse side of the melt, the temperature of the cooling tank 4 is 20°C, and a cast sheet having a thickness of 4.3 mm is formed. The cast sheet is subjected to 6 ratios of stretching in a mechanical direction (MD) at 100°C by using a longitudinal stretching machine, and then is subjected to 6 ratios of stretching in a transverse direction (TD) at 120°C by using a transverse stretching machine. The stretched oil film after cutting a scrap material is then cut into three sections, in which each section has a width of 800 mm; the two sections of the oil film at two sides are fed into a bidirectional synchronous stretching machine 16 at both sides by using a steering device 15; the oil film at the middle section is fed into the bidirectional synchronous stretching machine 16 in the middle section to be simultaneously subjected to 6 ratios of stretching in a mechanical direction (MD) and a transverse direction (TD) at 120°C. The second bidirectional stretched oil film is then passed through an extraction tank 12 containing dichloromethane to extract white oil from the oil film, and the extracted film is dried. The resulting dried microporous film is fed into a transverse stretching machine to be subjected to 1.3 ratios of stretching in TD at 130°C, then to be subjected to 1.1 ratios of retracting in TD, and to be subjected to heat shaping at 133°C. Next, the thin film is wound up by a take-up roller so as to obtain a polyethylene microporous film having a thickness of 3.3 µm.

The thickness, tensile strength, puncture strength, porosity, air permeability and thermal contraction of the prepared polyethylene microporous membrane are measured respectively, and the measurement results of the characteristics of the obtained polyolefin microporous membrane are shown in table 1.

**Table 1 Test Results of Embodiments**

| Test item | | | Embodiment 1 | Embodiment 2 | Embodiment 3 |
|---|---|---|---|---|---|
| Thickness (µm) | | | 7.4 | 9.0 | 3.3 |
| Thickness range | | | 0.8 | 0.9 | 0.4 |
| Air permeability (cm³s⁻¹cm⁻²) | | | 0.274 | 0.228 | 0.354 |
| Air permeability (s/ in²*100c) | | | 55.7 | 67.9 | 43.8 |
| Air permeability value range | | | 18.3 | 21.6 | 19.5 |
| Tensile strength (MPa) | | TD | 697.7 | 588.4 | 467.3 |
| | | MD | 122.9 | 97.6 | 488.2 |
| Modulus (MPa) | | TD | 11335 | 9376 | 12193 |
| | | MD | 419 | 307 | 13386 |
| Puncture strength (g) | | | 389 | 787.3 | 830.5 |
| 105°C Heat contraction (%) | TD | | 574 | 646 | 484.5 |
| | MD | | 0 | 0 | 0 |
| Porosity (%) | | | 52.3 | 53.1 | 37.3 |
| Surface density (g/m²) | | | 3.2 | 3.4 | 4.3 |

In order to better demonstrate the beneficial effect of the present application, a comparison experiment is specifically performed as follows:

### Comparative Embodiment 1

First, polyethylene and white oil are added into a twin-screw extruder in the mass ratio of 1:3 by using a powder balance and a plunger pump, and are molten and plasticized at 190°C. The melt is extruded from a die to form a sheet, and the gel-shaped sheet is immediately passed through a pre-set gap between a shaping roller and a flattening roller of a casting machine (the surface temperature of the shaping roller and the flattening roller is set to be 16°C), and a cast sheet having a thickness of 1.4 mm is formed. The cast sheet is subjected to 7 ratios of stretching in a mechanical direction (MD) by using a longitudinal stretching machine at 100°C, and then is subjected to 7.5 ratios of stretching in a transverse direction (TD) by using a transverse stretching machine. The stretched oil film is then passed through an extraction tank containing dichloromethane to extract white oil from the oil film, and the extracted film is dried. The resulting dried microporous film is fed into a transverse stretching machine to be subjected to 1.3 ratios of stretching in TD at 130°C, then to be subjected to 1.1 ratios of retracting in TD, and to be subjected to heat shaping at 133°C. Next, the thin film is wound up by a wind-up roller so as to obtain a polyethylene microporous film having a thickness of 7 µm. The thickness, tensile strength, puncture strength, porosity, air permeability and thermal contraction of the prepared polyethylene microporous membrane are measured respectively, and the measurement results of the characteristics of the obtained polyolefin microporous membrane are shown in table 2.

### Comparative Embodiment 2

On the basis of Comparative Embodiment 1, the feeding amounts of polyethylene and white oil are increased, the thickness of the cast sheet is adjusted to 3.2 mm, the cast sheet is subjected to 7 ratios of stretching in a mechanical direction (MD) at 100°C by using a longitudinal stretching machine, then is subjected to 7.5 ratios of stretching in a transverse direction (TD) by using a transverse stretching machine, and then a polyethylene microporous film having a thickness of 20 µm is prepared. The thickness, tensile strength, puncture strength, porosity, air permeability and thermal contraction of the prepared polyethylene microporous film are measured respectively, and the measurement results of the characteristics of the obtained polyolefin microporous film are shown in Table 2.

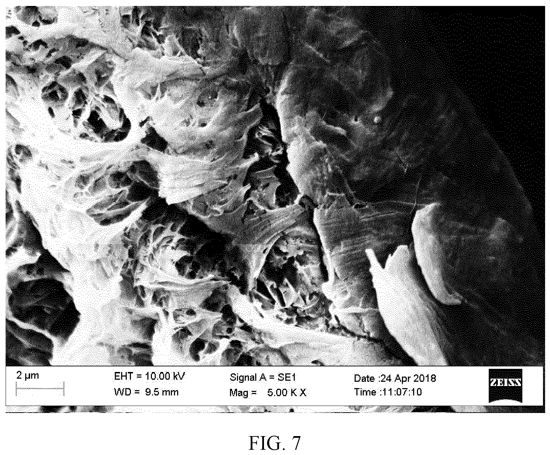

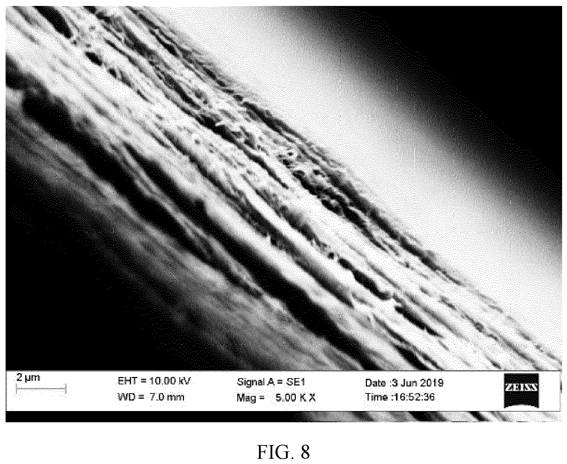

The cross-section of the cast sheet on the back roller of Comparative Embodiment 2 is shown in FIG. 7, and the cross-section of the resulting film is shown in FIG. 8.

It can be determined from FIG. 7 and FIG. 8 that, in the cast sheet and the film obtained in Comparative Embodiment 2, the cooling effect of the surface and inside of the cast sheet on the flattening roller is poor, and uneven macropores are formed inside the film after the film is formed by stretching, resulting in a high short circuit rate after the film is prepared into a battery.

### Comparative Embodiment 3

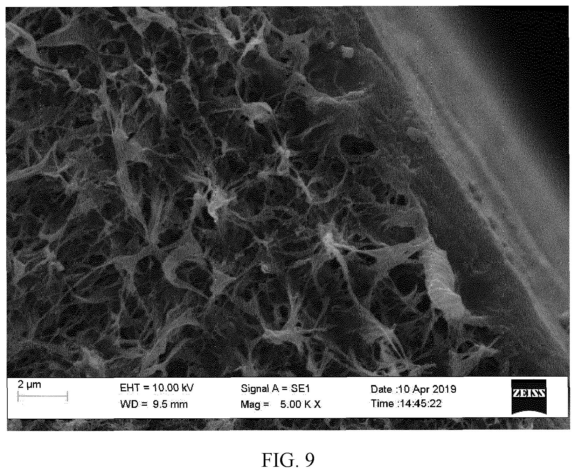

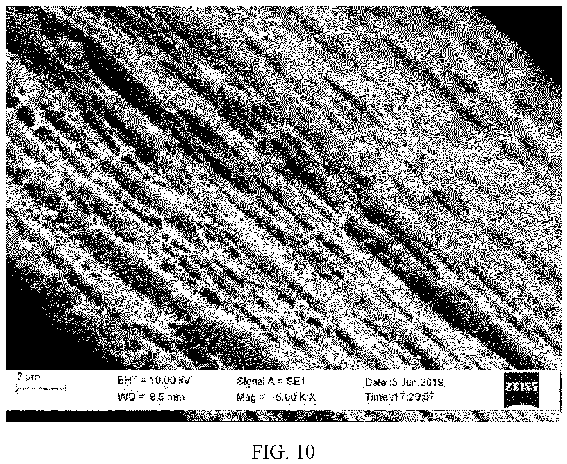

On the basis of Comparative Embodiment 2, a melt is extruded from a die to form a sheet, a gel-shaped sheet is immediately passed through a pre-set gap between a shaping roller and a flattening roller of a casting machine (the surface temperature of the shaping roller and the flattening roller is set to be 16°C), and a water bath is added to force-cool the reverse side of the melt, the temperature of the water bath being 20°C, so as to form a cast sheet with a thickness of 3.1 mm. The other operations are unchanged. The thickness, tensile strength, puncture strength, porosity, air permeability and thermal contraction of the prepared polyethylene microporous film are measured respectively, and the measurement results of the characteristics of the obtained polyolefin microporous film are shown in Table 2. The cross-section of the cast sheet on the back roller of Comparative Embodiment 3 is shown in FIG. 9, and the cross-section of the resulting film is shown in FIG. 10.

It can be determined from comparison between FIG. 7 and FIG. 9, and FIG. 8 and FIG. 10 that, by using the cooling system provided by the present application that is the flattening roller + the shaping roller + the cooling roller + the cooling tank, the obtained cast sheet becomes significantly denser, and the internal structure of the separator after being stretched and formed into a film is very dense, thereby greatly improving the safety of the separator and the performance consistency of the separator.

**Table 2 Test Results of Comparison Embodiments**

| Test item | | Comparative Embodiment 1 | Comparative Embodiment 2 | Comparative Embodiment 3 |
|---|---|---|---|---|
| Thickness (µm) | | 7.2 | 20.1 | 19.3 |
| Thickness range | | 1.8 | 4.3 | 2.1 |
| Air permeability (cm³s⁻¹cm⁻²) | | 0.122 | 0.059 | 0.066 |
| Air permeability (s/in²*100c) | | 127.3 | 263.8 | 233.4 |
| Air permeability value range | | 62.3 | 108.4 | 43.9 |
| Tensile strength (MPa) | TD | 167.7 | 197.3 | 217.3 |
| | MD | 182.9 | 208.2 | 238.1 |
| Modulus (MPa) | TD | 1103 | 1571 | 1732 |
| | MD | 1217 | 1485 | 1689 |
| Puncture strength (g) | | 389 | 787.3 | 830.5 |
| 105°C Heat contraction (%) | TD | 4.6 | 6.9 | 4.2 |
| | MD | 5.3 | 7.5 | 4.7 |
| Porosity (%) | | 44.3 | 47.3 | 42.3 |
| Surface density (g/m²) | | 3.8 | 10.3 | 11.1 |

By comparing the data in Table 1 and Table 2, it can be determined that, by using the device and method provided in the present application, the strength and the modulus of the separator prepared by multi-stage bidirectional stretching are greatly improved compared with the conventional process, and the thickness and the air permeability ranges are small, so that the uniformity of the separator is greatly improved.

In the present invention, the process design of an ultra-high stretching ratio in combination with multiple longitudinal, transverse or bidirectional stretching devices is used for performing multiple superposed stretching, so as to form a stretching ratio far exceeding that of a conventional ordinary stretching device. The regional stretching ratio can be greatly increased to an order of 100* 100 ratios, greatly improving the orientation, crystallization, fine denier of microscopic fibers and specific strength of the thin film material, and reducing the elongation at break of the film material, and forming an ultra-high modulus polyolefin thin film material exceeding 10 GPa. The material can be widely applied to fields such as lithium battery separators, air filtration membranes, water treatment membranes, oil and water separation membranes, and a high-specific-strength and high-modulus film material lining for safety protection equipment, and has huge technical advantages and application space.

## Claims

1. A device for preparing a high-strength and high-modulus polyolefin thin film, wherein: the device comprises a melt extruder, a cooling system, a stretching system and an extraction system, and **characterized in that** the melt extruder, the cooling system, the stretching system and the extraction system are configured in a sequence; the stretching system comprises a plurality among a transverse stretching machine for stretching an object to be stretched in a transverse direction, a longitudinal stretching machine for stretching an object to be stretched in a longitudinal direction, and a bidirectional synchronous stretching machine (16) for stretching an object to be stretched in a bidirectional direction; slitting machine (9) for slitting an object to be stretched, and a steering device (15) is provided behind the slitting machine (9); preferably, a plurality of the bidirectional synchronous stretching machines (16) are provided; preferably, three bidirectional synchronous stretching machines (16) are stacked in a height direction; preferably, the bidirectional synchronous stretching machine (16) is provided with a heating oven (10) and a cooling oven (11), and the heating oven (10) has a temperature accuracy of ± 0.5°C and a wind speed uniformity of ± 1 m/s.

2. The device for preparing the high-strength and high-modulus polyolefin thin film according to claim 1, wherein: the cooling system comprises a flattening roller (1), a shaping roller (2), a cooling roller (3) and a cooling tank (4);
the shaping roller (2) is provided between the flattening roller (1) and the cooling roller (3), the flattening roller (1) is used for attaching a melt from a die (5) of the melting extruder to a surface of the shaping roller (2), a lower portion of the shaping roller (2) is provided within the cooling tank (4), and the cooling roller (3) is used for cooling a cast sheet processed by the shaping roller (2).

3. The device for preparing the high-strength and high-modulus polyolefin thin film according to claim 1, wherein: the stretching system comprises the longitudinal stretching machine, the transverse stretching machine, the slitting machine (9) and the bidirectional synchronous stretching machine (16), and the longitudinal stretching machine, the transverse stretching machine, the slitting machine (9) and the bidirectional synchronous stretching machine are provided in the sequence; the slitting machine (9) is used for slitting a thin film stretched by the transverse stretching machine.

4. The device for preparing the high-strength and high-modulus polyolefin thin film according to claim 1, wherein: the extraction system comprises one or more groups of extraction tanks (12), and an each group of the extraction tanks (12) is provided with multiple groups of drafting rollers (13) and ultrasonic generation devices (14).

5. A method for preparing the high-strength and high-modulus polyolefin thin film with the device according to any one of the claims 1 to 4, comprising:
melting and plastifying polyolefin resin and a solvent in the melt extruder; after extrusion by using a die (5), implementing heat-induced phase separation at the shaping roller (2) and the cooling tank (4), so as to obtain a cast sheet; and performing stretching by a multi-stage combined stretching system, performing extraction by the extraction system, and performing a post-treatment, so as to obtain the high-strength and high-modulus polyolefin thin film.

6. The method for preparing the high-strength and high-modulus polyolefin thin film according to claim 5, wherein: a melt extruded from the die (5) has a thickness of 2 to 10 mm.

7. The method for preparing the high-strength and high-modulus polyolefin thin film according to claim 5, wherein the stretching system comprises stretching modes of:
performing 1 to 10 ratios of longitudinal stretching, 1 to 10 ratios of transverse stretching and (1 to 10)*(1 to 10) ratios of bidirectional synchronous stretching in the sequence; or,
performing 1 to 10 ratios of the longitudinal stretching and 1 to 10 ratios of the transverse stretching in the sequence, and performing 1 to 10 ratios of the longitudinal stretching and 1 to 10 ratios of the transverse stretching repeatedly once; or,
performing (1 to 10)*(1 to 10) ratios of an independent bidirectional synchronous stretching continuously twice; or,
performing (1 to 10)*(1 to 10) ratios of the bidirectional synchronous stretching, 1 to 10 ratios of the longitudinal stretching and 1 to 10 ratios of the transverse stretching in the sequence.

8. The method for preparing the high-strength and high-modulus polyolefin thin film according to claim 5, wherein: performing the post-treatment comprises drying, transverse hole expansion, the transverse stretching and a longitudinal bidirectional retraction treatment and heat shaping in the sequence; preferably, when the extraction is performed, a stretched scrap material is not cut in an advance.

## Patentansprüche

1. Vorrichtung zur Herstellung eines hochfesten und hochmoduligen Polyolefin-Dünnfilms,
wobei die Vorrichtung einen Schmelzextruder, ein Kühlsystem, ein Strecksystem und ein Extraktionssystem umfasst, **dadurch gekennzeichnet, dass** der Schmelzextruder, das Kühlsystem, das Strecksystem und das Extraktionssystem in einer Reihenfolge konfiguriert sind;
wobei das Strecksystem eine Vielzahl von Querstreckmaschine zum Strecken eines zu streckenden Objekts in einer Querrichtung, eine Vielzahl von Längsstreckmaschine zum Strecken eines zu streckenden Objekts in einer Längsrichtung umfasst,
eine bidirektionale synchrone Streckmaschine (16) zum Strecken eines zu streckenden Objekts in einer bidirektionalen Richtung; und eine Schneidmaschine (9) zum Schlitzen eines zu streckenden Objekts,
wobei eine Lenkvorrichtung (15) hinter der Schneidmaschine (9) vorgesehen ist; wobei vorzugsweise mehrere bidirektionale synchrone Streckmaschinen (16) vorgesehen sind; wobei vorzugsweise drei bidirektionale synchrone Streckmaschinen (16) in einer Höhenrichtung gestapelt sind; wobei vorzugsweise die bidirektionale synchrone Streckmaschine (16) mit einem Heizofen (10) und einem Kühlofen (11) versehen ist, und wobei der Heizofen (10) eine Temperaturgenauigkeit von ± 0,5°C und eine Gleichmäßigkeit der Windgeschwindigkeit von ± 1 m/s aufweist.

2. Vorrichtung zur Herstellung eines hochfesten und hochmoduligen Polyolefin-Dünnfilms nach Anspruch 1, wobei das Kühlsystem eine Glättungswalze (1), eine Formgebungswalze (2), eine Kühlwalze (3) und einen Kühltank (4) umfasst;
wobei die Formgebungswalze (2) zwischen der Glättungswalze (1) und der Kühlwalze (3) vorgesehen ist, wobei die Glättungswalze (1) zum Anbringen einer Schmelze aus einer Form (5) des Schmelzextruders an einer Oberfläche der Formgebungswalze (2) verwendet wird, wobei ein unterer Abschnitt der Formgebungswalze (2) innerhalb des Kühltanks (4) vorgesehen ist, und wobei die Kühlwalze (3) zum Kühlen einer gegossenen Platte verwendet wird, die von der Formgebungswalze (2) verarbeitet wird.

3. Vorrichtung zur Herstellung eines hochfesten und hochmoduligen Polyolefin-Dünnfilms nach Anspruch 1, wobei das Strecksystem die Längsstreckmaschine, die Querstreckmaschine, die Schneidmaschine (9) und die bidirektionale synchrone Streckmaschine (16) umfasst, wobei die Längsstreckmaschine, die Querstreckmaschine, die synchrone Schneidmaschinen (9) und die bidirektionale synchron Streckmaschine in der Reihenfolge vorgesehen sind; wobei die synchrone Schneidmaschine (9) zum Schneiden eines durch die Querstreckmaschine gestreckten dünnen Films verwendet wird.

4. Vorrichtung zur Herstellung eines hochfesten und hochmoduligen Polyolefin-Dünnfilms nach Anspruch 1, wobei das Extraktionssystem eine oder mehrere Gruppen von Extraktionsbehältern (12) umfasst, und wobei jede Gruppe der Extraktionsbehälter (12) mit mehreren Gruppen von Zugwalzen (13) und Ultraschallerzeugungsvorrichtungen (14) versehen ist.

5. Verfahren zur Herstellung des hochfesten und hochmoduligen Polyolefin-Dünnfilms mit der Vorrichtung nach einem der Ansprüche 1 bis 4, umfassend:
Schmelzen und Plastifizieren von Polyolefinharz und einem Lösungsmittel im Schmelzextruder; nach der Extrusion mittels einer Form (5), Durchführen einer wärmeinduzierten Phasentrennung an der Formgebungswalze (2) und dem Kühltank (4), um eine gegossene Platte zu erhalten; und Durchführen einer Streckung durch ein mehrstufiges kombiniertes Strecksystem, Durchführen einer Extraktion durch das Extraktionssystem und Durchführen einer Nachbehandlung, um den hochfesten und hochmoduligen Polyolefin-Dünnfilm zu erhalten.

6. Verfahren zur Herstellung des hochfesten und hochmoduligen Polyolefin-Dünnfilms nach Anspruch 5, wobei eine aus der Form (5) extrudierte Schmelze eine Dicke von 2 bis 10 mm aufweist.

7. Verfahren zur Herstellung des hochfesten und hochmoduligen Polyolefin-Dünnfilms nach Anspruch 5, wobei das Strecksystem folgende Streckarten umfasst:
Durchführen von 1 bis 10 Verhältnissen des Längsstreckens, 1 bis 10 Verhältnissen des Querstreckens und (1 bis 10)*(1 bis 10) Verhältnissen des bidirektionalen synchronen Streckens in der Reihenfolge; oder,
Durchführen von 1 bis 10 Verhältnissen des Längsstreckens und 1 bis 10 Verhältnissen des Querstreckens in der Reihenfolge, und wiederholtes einmaliges Durchführen von 1 bis 10 Verhältnissen des Längsstreckens und 1 bis 10 Verhältnissen des Querstreckens; oder,
Durchführen von (1 zu 10)*(1 zu 10)-Verhältnissen eines unabhängigen bidirektionalen synchronen Streckens kontinuierlich zweimal; oder
Durchführen von (1 bis 10)*(1 bis 10) Verhältnissen des bidirektionalen synchronen Streckens, 1 bis 10 Verhältnissen des Längsstreckens und 1 bis 10 Verhältnissen des Querstreckens in der Reihenfolge.

8. Verfahren zur Herstellung des hochfesten und hochmoduligen Polyolefin-Dünnfilms nach Anspruch 5, wobei das Durchführen einer Nachbehandlung das Trocknen, eine Querlocherweiterung, das Querstrecken und eine bidirektionale Längsrückzugsbehandlung und eine Wärmeformung in der Reihenfolge umfasst; wobei vorzugsweise bei der Durchführung der Extraktion ein gestrecktes Abfallmaterial nicht im Voraus geschnitten wird.

## Revendications

1. Dispositif pour préparer un film mince de polyoléfine à haute solidité et à haut module, dans lequel le dispositif comprend une extrudeuse de masse fondue, un système de refroidissement, un système d'étirage et un système d'extraction, **caractérisé en ce que** ladite extrudeuse de masse fondue, ledit système de refroidissement, ledit système d'étirage et ledit système d'extraction sont mises en ordre; ledit système d'étirage comprend une pluralité parmi une machine d' étirage transversal pour étirer un objet à étirer dans un sens transversal, une machine d' étirage longitudinal pour étirer un objet à étirer dans un sens longitudinal, une machine d' étirage synchrone bidirectionnelle (16) pour étirer un objet à étirer dans un sens bidirectionnelle, une machine de coupe (9) pour couper un objet à étirer, et un dispositif de braquage (15) mis derrière ladite machine de coupe (9) ; de préférence, une pluralité de ladites machines d' étirage synchrone bidirectionnelle (16) sont disposées; de préférence, trois machines d' étirage synchrone bidirectionnelle (16) sont empilées en hauteur; de préférence, ladite machine d' étirage synchrone bidirectionnelle (16) est équipée d'un four de chauffage (10) et d'un four de refroidissement (11), et ledit four de chauffage (10) a une précision de température de ±0.5°C et une uniformité de vitesse du vent de ±1 m/s.

2. Dispositif pour préparer un film mince de polyoléfine à haute solidité et à haut module selon la revendication 1, **caractérisé en ce que** ledit système de refroidissement comprend un rouleau d'aplatissement (1), un rouleau de façonnage (2), un rouleau de refroidissement (3) et un réservoir de refroidissement (4); ledit rouleau de façonnage (2) est disposé entre ledit rouleau d'aplatissement (1) et ledit rouleau de refroidissement (3), ledit rouleau d'aplatissement (1) est utilisé pour attacher une masse fondue à partir d'une matrice (5) de ladite extrudeuse de masse fondue à une surface dudit rouleau de façonnage (2), une partie inférieure dudit rouleau de façonnage (2) est disposée à l'intérieur dudit réservoir de refroidissement (4), et ledit rouleau de refroidissement (3) est utilisé pour refroidir une feuille de moulage traitée par ledit rouleau de façonnage (2).

3. Dispositif pour préparer un film mince de polyoléfine à haute solidité et à haut module selon la revendication 1, **caractérisé en ce que** ledit système d'étirage comprend ladite machine d'étirage longitudinal, ladite machine d' étirage transversal, ladite machine de coupe (9) et ladite machine d'étirage synchrone bidirectionnelle (16); ladite machine d' étirage longitudinal, ladite machine d' étirage transversal, ladite machine de coupe (9) et ladite machine d'étirage synchrone bidirectionnelle (16) sont mises en ordre; ladite machine de coupe (9) est utilisée pour couper un film mince étiré par ladite machine d'étirage transversale.

4. Dispositif pour préparer un film mince de polyoléfine à haute solidité et à haut module selon la revendication 1, **caractérisé en ce que** ledit système d'extraction comprend un ou plusieurs groupes de réservoirs d'extraction (12), et chaque groupe de réservoirs d'extraction (12) est équipé de plusieurs groupes de rouleaux de traînage(13) et de dispositifs de génération à ultrason (14).

5. Procédé pour préparer un film mince de polyoléfine à haute solidité et à haut module au moyen du dispositif selon l'une quelconque des revendications 1 à 4, **caractérisé en ce que**, le procédé comprend les étapes de :
faire fondre et plastifier une résine polyoléfine et un solvant dans ludite extrudeuse de masse fondue;
après extrusion au moyen d'une matrice (5), exécuter une séparation de phase induite audit rouleau de façonnage (2) et audit réservoir de refroidissement (4) afin de obtenir une feuille de moulage; et
exécuter un étirage au moyen d'un système d'étirage combiné à plusieurs étages, exécuter une extraction au moyen dudit système d'extraction, et exécuter un post-traitement, afin de obtenir le film mince de polyoléfine à haute solidité et à haut module.

6. Procédé pour préparer un film mince de polyoléfine à haute solidité et à haut module selon la revendication 5, **caractérisé en ce que**, une masse fondue extrudée à partir de ladit matrice (5) a une épaisseur de 2 à 10 mm.

7. Procédé pour préparer un film mince de polyoléfine à haute solidité et à haut module selon la revendication 5, **caractérisé en ce que**, ledit système d'étirage exécute un étirage de la manière suivante:
une exécution d'un étirage longitudinal en fonction de 1 à 10 ratios, d'un étirage transversal en fonction de 1 à 10 ratios et d'un étirage synchrone bidirectionnel en fonction de (1 à 10)*(1 à 10) ratios en ordre; ou
une exécution du étirage longitudinal en fonction de 1 à 10 ratios et du étirage transversal en fonction de 1 à 10 ratios en ordre, et une exécution du étirage longitudinal en fonction de 1 à 10 ratios et du étirage transversal en fonction de 1 à 10 ratios à plusieurs reprises une fois; ou
une exécution d'un étirage synchrone bidirectionnel indépendant en fonction de (1 à 10)*(1 à 10) ratios à deux fois en continu; ou
une exécution du étirage synchrone bidirectionnel en fonction de (1 à 10)*(1 à 10) ratios, du étirage longitudinal en fonction de 1 à 10 ratios et du étirage transversal en fonction de 1 à 10 ratios en ordre.

8. Procédé pour préparer un film mince de polyoléfine à haute solidité et à haut module selon la revendication 5, **caractérisé en ce que**, la étape de exécuter un post-traitement comprend un séchage, une expansion transversale à trous, le étirage transversal et un traitement de rétraction longitudinale bidirectionnelle et un façonnage thermiqu en ordre; de préférence, lors de l'extraction, un matériau de rebut étiré n'est pas coupé à l'avance.
